(19) Europäisches Patentamt
European Patent Office
Office européen des brevets

(11) EP 4 075 614 A1

(12) **EUROPEAN PATENT APPLICATION**

(43) Date of publication:
**19.10.2022 Bulletin 2022/42**

(21) Application number: **22168035.8**

(22) Date of filing: **12.04.2022**

(51) International Patent Classification (IPC):
*H02B 1/28* ^(2006.01)      *H02G 3/08* ^(2006.01)

(52) Cooperative Patent Classification (CPC):
**H02B 1/28; H01H 9/042; H02K 5/136; H02K 11/33;**
H02G 3/088

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2021 IT 202100009209**

(71) Applicant: **Cortem S.p.A.**
**34070 Villesse (IT)**

(72) Inventor: **Gratton, Riccardo**
**34151 Trieste (TS) (IT)**

(74) Representative: **Petraz, Gilberto Luigi et al**
**GLP S.r.l.**
**Viale Europa Unita, 171**
**33100 Udine (IT)**

(54)    **ENCLOSURE**

(57)    The invention concerns an explosion-proof enclosure (100) comprising a body (101), a lid (102) to close the body (101) and a hinging element (103) between said body (101) and said lid (102), as well as a lamination joint (10).

fig. 1

**Description**

FIELD OF THE INVENTION

The present invention concerns an explosion-proof enclosure, in particular but not only suitable for use in atmospheres that are explosive due to the presence of combustible gases or powders, even where gases such as acetylene, hydrogen and carbon disulfide are present.

BACKGROUND OF THE INVENTION

It is known that the design and construction requirements in the presence of explosive atmospheres are defined by European standards harmonized with the European ATEX Directive 2014/34/EU.

For application to flammable gases, vapors and mists only, the EN60079-14 standard provides the "Ex d" method, that is, the method for containing explosions in electrical apparatuses that are normally sparking or sparking only in the event of a malfunction. The "Ex d" protection method is generally applied to electrical apparatuses that cannot be installed directly in places where there is a danger of explosion due to the presence of potentially explosive atmospheres.

The above methods provide that the apparatuses or components that could cause the ignition of the potentially explosive atmosphere has to be enclosed in an enclosure resistant to the pressure developed by an internal explosion of an explosive mixture.

The principle on which they are based assumes that it is impossible to prevent a gas from penetrating anywhere, even in the presence of seals. If a trigger is produced in an enclosure, which can be represented for example by a spark between two electrical contacts, an explosion could occur which, if not confined inside the enclosure, could cause the latter to behave like an explosive device.

In order to prevent this, enclosures are used that are built with a mechanical resistance such as to contain the overpressure caused by the explosion and which allow the combusted gases to escape.

The escape of combusted gases from the enclosure can be allowed by a lamination joint, understood as an element of an interface between two parts of an enclosure, for example a body and a lid. The lamination joint allows the combusted gases to exit the enclosure itself and to cool down along its path, so that they are no longer able to ignite the atmosphere outside the enclosure. In this way, the enclosure prevents the propagation to the surrounding atmosphere of the effects resulting from the ignition occurring inside it: sparks, open flames, hot gases, overheating.

For this reason, the joint must be long enough and with a narrow enough interstice to guarantee the rapid venting of the combusted gases and the cooling thereof, without closing or sealing the enclosure.

It must also be considered that enclosures can also be intended to be opened one or more times to house the devices inside them, for maintenance activities, for programming activities and suchlike. The lamination joints can therefore be of the type with permanent closing or the type with occasional opening, for management and/or maintenance operations.

Lamination joints can be non-threaded or threaded. Threaded joints include different types of joints, the main ones being cylindrical and conical. Cylindrical and conical joints have the characteristic that they are universal, usable for any type of application and with gases of any group. Normally they are difficult to find in the apparatuses on the market because they are difficult to produce, which is reflected in a higher cost. Flat joints, on the other hand, are the most common, but have the disadvantage that they cannot be used everywhere; in fact, they are prohibited in applications for plants where there is the presence of group II C gases, such as for example acetylene, hydrogen and carbon disulfide. Other types of joints provide a combination of cylindrical and flat joints or more complex shapes such as multi-segment or sawtooth joints.

One problem with enclosures with non-flat joints is that the closing system of the enclosure can become complex, since it is necessary to make coincide the two respective parts of the joint positioned on the two respective parts of the enclosure, such as lid and body.

Document CN212511248U describes an explosion-proof closing device of the traditional type, comprising a cover plate and a lid, hinged to each other, in which on the cover plate there is a seating flared toward the inside of the plate and on the lid a substantially rectangular protrusion is provided. The hinge is distant from the cover plate and this characteristic, together with the different conformation of the seating and the protrusion, can cause problems of alignment between the components, so that a precise coupling and a reliable seal between the two components cannot be guaranteed.

There is therefore a need to perfect an enclosure which can overcome at least one of the disadvantages of the state of the art.

In particular, one purpose of the present invention is to provide an enclosure which can also be used in atmospheres that are explosive due to the presence of group IIC gases.

Furthermore, the enclosure according to the invention must be openable and reclosable in a simple and reliable way.

Another purpose is to provide an enclosure which allows a controlled release of possible gases under pressure due to possible explosions inside it.

Another purpose of the present invention is to provide an enclosure which is simple in construction.

The Applicant has devised, tested and embodied the present invention to overcome the shortcomings of the state of the art and to obtain these and other purposes and advantages.

SUMMARY OF THE INVENTION

The present invention is set forth and characterized in the independent claims. The dependent claims describe other characteristics of the present invention or variants to the main inventive idea.

In accordance with the above purposes, the embodiments described here concern an explosion-proof enclosure that overcomes the limits of the state of the art and eliminates the defects present therein.

In accordance with some embodiments, the enclosure comprises a containing body and a lid to close the body.

The enclosure comprises a hinging element between the body and the lid which has as the only degree of freedom a rotation about an axis of rotation. The enclosure therefore has the advantage that the use of more complex and expensive constraint elements, which in addition to the rotation also allow the translation of the lid, is not provided.

The enclosure also comprises a lamination joint comprising a seating able to house an engagement element which has, in its section transverse to its longitudinal development, a trapezoidal shape.

The seating is mating in shape with the engagement element, and it is configured to define a clearance with respect to the engagement element which, advantageously, defines an interstice for gas to escape.

The enclosure according to the invention is therefore suitable for the non-transmission of an internal ignition according to 60079-1 standard. In particular, the enclosure has a lamination joint with multiple segments suitable to laminate a possible internal explosion, preventing the propagation of the explosion itself outside the enclosure, in the worst test conditions as defined by the standard as above and with group IIC gases, which by their nature develop the greatest pressures and are therefore the most difficult to contain.

According to some embodiments, the hinging element is positioned in close proximity to the outer edge of the body and the lid, which can therefore rotate substantially in correspondence with the respective lateral edges.

This conformation, together with the trapezoidal shape of the seating and of the engagement element, allows a controlled rotation of the lid with respect to the body in the event of any internal explosions that lead to an increase in pressure, so that any gas under pressure can escape in complete safety.

One edge of the engagement element, during use, can be able to describe a trajectory corresponding to a circumference that has the axis of rotation as its center and passing through the edge of the engagement element.

Advantageously, the enclosure according to the invention can have values of its size variables such that the edge of the engagement element is not incident with the seating in any point whatsoever of the trajectory as above. In particular, the size variables relate to height and width of the joint, angle of inclination and distance from the center of rotation. In this way, the enclosure according to the invention can have a rotation of the body and lid with respect to each other without there being any interference between them. In particular, the path of the edge of the engagement element of the lamination joint is not incident with respect to the seating.

Advantageously, the size variables and the corresponding size tolerances used to define the lamination joint are able to allow the use of constraint elements that have, as the only degree of freedom, the rotation between them of the lid and of the body of the enclosure, since there is in fact no need for constraint elements that, in addition to the rotation, also allow the translation of the lid, because the relative rotation of the two components does not present any interference between the body and the lid.

DESCRIPTION OF THE DRAWINGS

These and other aspects, characteristics and advantages of the present invention will become apparent from the following description of some embodiments, given as a non-restrictive example with reference to the attached drawings wherein:

- fig. 1 is a perspective view of an enclosure according to some embodiments;
- fig. 1a is a perspective view of an enlarged detail of the enclosure of fig. 1;
- figs. from 2 to 4 are lateral sections of an example embodiment of a detail of the enclosure of fig. 1;
- fig. 4a is an enlarged detail of fig. 4;

To facilitate comprehension, the same reference numbers have been used, where possible, to identify identical common elements in the drawings. It is understood that elements and characteristics of one embodiment can be conveniently combined or incorporated into other embodiments without further clarifications.

DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

The embodiments described here with reference to the attached drawings concern an explosion-proof enclosure 100.

By enclosures 100, we mean both small or medium-sized enclosures or boxes, usable for example as junction boxes, terminal boxes or suchlike, as well as larger-sized cabinets and casings such as those for containing control panels, electric motors, transformers or suchlike.

An enclosure 100 can comprise a body 101 and a lid 102 to close the body 101.

The body 101 can comprise an abutment element 101a and a container 101b able to contain the contents to be positioned in the enclosure 100.

The abutment element 101a can delimit the container 101b at the top, constituting its upper edge.

The lid 102 can comprise an abutment element 102a and a cover element 102b. The cover element 102b can be able to cover the enclosure 100.

The abutment element 102a can delimit the cover element 102b at the bottom, constituting its lower edge.

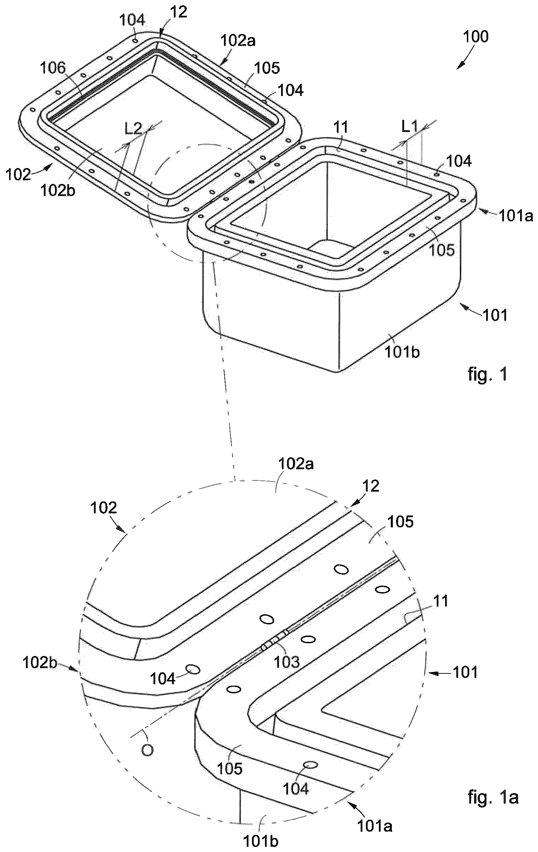

The abutment element 101a and the abutment element 102a can be, on their upper and lower side respectively, mating in shape with each other. In this way, it is possible to obstruct the entry of gases and powders into the enclosure 100 when it is closed. For example, and as shown in figs. 1 and 1a, the abutment element 101a and the abutment element 102a are flat, at least in an external strip thereof. In this way, the respective facing surfaces are located in contact with each other for the entire extension of the external strip.

The width L1 of the abutment element 101a is preferably greater than the thickness of the container 101b. The width L2 of the abutment element 102a is preferably greater than the thickness of the cover element 102b.

The two widths L1, L2 can be equal to each other. In other embodiments, the width L2 of the abutment element 102a of the lid 102 can be comprised between 0.9 and 1.1 times the width of the abutment element 101a of the body 101.

Advantageously, in the event of an explosion, a greater width L1, L2 of the abutment elements 101a, 102a forces the exhaust gases to travel for a longer path before exiting outside the enclosure 100, thus more effectively exhausting any overtemperatures, flames and sparks. At the same time, a thickness of the container 101b and of the cover element 102b not constrained to the width L1, L2 of the abutment elements 101a, 102a allows to contain the weight and overall sizes of the enclosure 100, with the same strength required to contain a possible explosion.

For the movement of the lid 102 with respect to the body 101, the enclosure 100 can comprise a hinging element 103, for example a flexible sheet or suchlike, preferably, and as shown in the drawings, a hinge 103.

As shown in figs. from 2 to 4, the hinge 103 can have two hinging arms 103a and attachment elements 103b which connect the hinging arms 103a to the lid 102 and to the body 101, respectively. The hinge 103 can also have a constraint pin 103c to constrain the two hinging arms 103a to each other and allow them to rotate about an axis of rotation O.

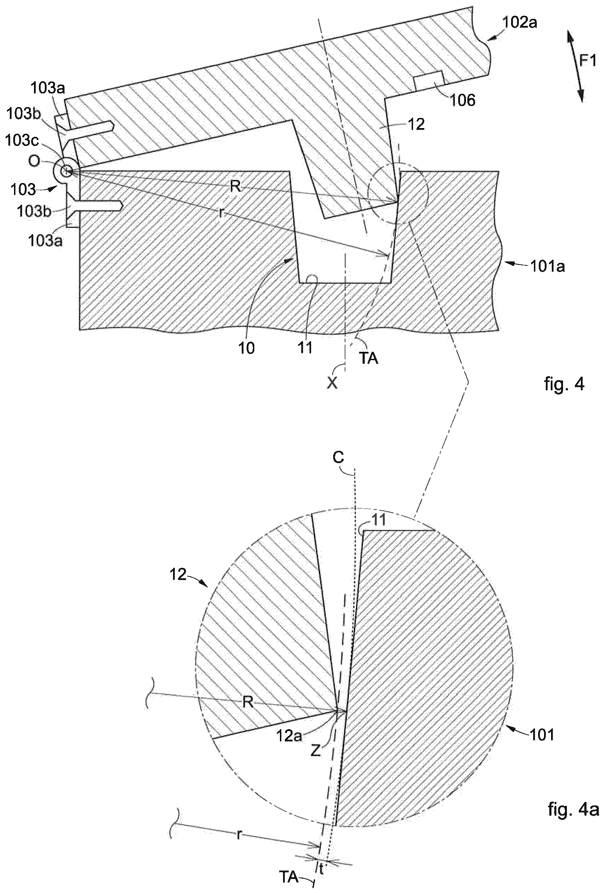

The axis of rotation O can be defined in correspondence with the hinging element 103. With respect to the axis of rotation O, the body 101 and the lid 102 are able to move, one with respect to the other, with a rotational motion F1 (fig. 4).

The hinging element 103 can have only one degree of freedom, and therefore be able to allow only a rotational motion between the lid 102 and the body 101. The motion between the lid 102 and the body 101 can therefore not have translational components.

According to some embodiments, the hinging element 103 is positioned with its axis of rotation O disposed substantially in correspondence with a lateral edge of the body 101 and the lid 102, which can therefore rotate substantially in correspondence with the respective lateral edges. Preferably, the axis of rotation O is located at the minimum possible distance Dmin from the respective lateral edges of the body 101 and of the lid 102, compatibly with the value defined by the formula below. By way of example, according to possible embodiments, this minimum distance Dmin can be smaller than 7mm.

The enclosure 100 can comprise a lamination joint 10 which can comprise a seating 11 and an engagement element 12.

In a preferred embodiment, the seating 11 can be positioned on the body 101 while the engagement element 12 can be positioned on the lid 102. In particular, the seating 11 can be positioned on the abutment element 101a of the body 101 while the engagement element 12 can be positioned on the abutment element 102a of the lid 102.

In another embodiment, not shown in the drawings, the seating 11 can be positioned on the lid 102 while the engagement element 12 can be positioned on the body 101.

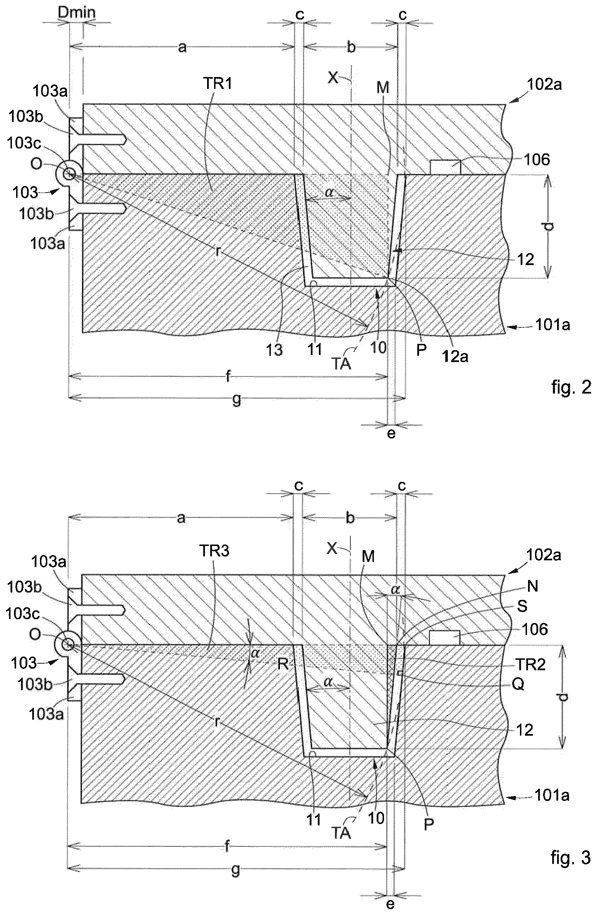

In particular, and as shown in figs. 2, 3 and 4, the engagement element 12 can have, in a section transverse to its longitudinal development, a trapezoidal shape, preferably an isosceles trapezoid shape.

In particular, the engagement element 12 has a shape with a trapezoidal section tapered toward its free end, and the seating 11 consequently has a shape tapered inward. In the example case in which the engagement element 12 is provided on the lid 102, the larger base of the trapezoidal shape will face toward the lid 102 itself, while the smaller base of the trapezoid will face toward the body 101. With regards to the seating 11, the smaller base will be inside the body 101, in correspondence with the bottom of the seating 11, while the larger base will face toward the lid 102. The inclined sides of the trapezoidal shape of the engagement element 12 and of the seating 11 can be advantageously parallel to each other.

The seating 11 can have a shape mating with the shape of the engagement element 12, with sizes larger than the shape of the engagement element 12 by respective clearance values necessary to define, during use, an interstice 13 for gases to escape. The tolerance values, and therefore the height or heights of the interstice 13, can be calculated in a known way.

During use, the joint 10 does not therefore define the circular path for the escape of the gases usually used for group IIC gases, but a path that is linear in segments, developed in order to adapt the shape of the enclosure 100 to the prevailing demands of the market, without constraining it.

The joint 10, which can be defined as a joint with multiple segments, unlike flat joints, can also be used where group IIC gases are present.

Figs. 2, 3, 4, 4a show, in section, a detail of an enclosure 100 in its part comprising the lamination joint 10 and the hinge 103.

With reference to figs. 2 and 3, the following size variables relating to the abutment elements 101a, 102a can be defined:

- a: distance of the beginning of the seating 11 from the axis of rotation O;
- b: maximum width of the engagement element 12;
- c: horizontal projection of the clearance between the seating 11 and the engagement element 12;
- $\alpha$: angle of inclination of the engagement element 12 and of the seating 11 with respect to a vertical axis X;
- d: height of the engagement element 12;
- r: radius of the circumference that has the axis of rotation O as its center and passing through the edge 12a.

In a system of this type, the criticality is represented by the rotation of the edge 12a of the engagement element 12 that is opposite the axis of rotation O. As shown in figs. 4 and 4a, this engagement element 12, on the occasion of the relative rotational motion between the body 101 and the lid 102, follows a trajectory TA in the shape of an arc of circumference that has the center of rotation O of the system as its center, and radius r.

The values of the size variables a, b, c, d, r, $\alpha$ of the enclosure 100 can be such that the trajectory TA is not incident with the seating 11 in any point whatsoever, as can be seen in the enlargement shown in fig. 4a.

To express the radius r of this circumference with respect to the size variables a, b, c, d, $\alpha$, please consider a right-angled triangle TR1, identified with the letters MOP in fig. 2, which has the height d of the engagement element 12 as the smaller cathetus, and the larger cathetus of which can be calculated as a function of the size variables a, b, c, d, $\alpha$.

Please also consider a right-angled triangle TR2, identified with the letters MNP in fig. 3, which has the height d of the engagement element 12 as the larger cathetus and an angle equal to the angle $\alpha$ as the angle between the larger cathetus and the hypotenuse. Let e be the smaller cathetus of the triangle TR2.

The value of e can be calculated as:

$$e = d * \sin \alpha$$

The length f of the larger cathetus of the triangle TR1 can therefore be calculated as:

$$f = a + c + b - e$$

The radius r of the circumference corresponding to the trajectory TA expressed with respect to the size variables a, b, c, d, $\alpha$ is therefore equal to:

$$r = \sqrt{d^2 + f^2}$$

The circumference corresponding to the trajectory TA can take as its largest value a circumference coinciding with the circumference C which has the axis of rotation O as its center and tangent to the profile of the seating 11.

As shown in fig. 4a, the radius R of this circumference will be orthogonal, at the point Z, to the profile of the seating 11 itself, due to the intrinsic definition of "tangent". The radius R is equal to the cathetus of the right-angled triangle TR3, identified with the letters OQS in fig. 3, which in a known way has an angle corresponding to $\alpha$ as the smaller angle, and a hypotenuse of length g:

$$g = a + b + 2 * c$$

From which:

$$R = g * \cos \alpha$$

With reference to the above, the enclosure 100 can have size parameters such as to satisfy the following geometric conditions:

R - r - t > 0

where t is defined as the accepted tolerance of shape and position, as shown in the enlarged detail of fig. 4a.

In explicit form, the geometric conditions can be expressed as a function of the size variables a, b, c, d, $\alpha$ by the following formula:

$$\left((a + b + 2 * c) * cos\alpha.\right) - \sqrt{d^2 + \left(a + b + c - (d * sin\alpha.)\right)^2}) - t > 0$$

Advantageously, and as shown in fig. 4a, the geometric conditions as above, and the variables thus set, are such that the arc-shaped trajectory TA of the engagement element 12 is not incident with respect to the seating 11. In this way, there can be no interferences between the body 101 and the lid 102.

The enclosure 100 can have systems for attaching the lid 102 to the body 101, able to keep the enclosure 100 closed.

The attachment systems can comprise hooks, screws or suchlike. Preferably, and as shown in the drawings, the attachment systems comprise screws. The attachment systems can also comprise cavities 104 for housing the hooks, screws and suchlike, for example cavities for inserting hooks or preferably threaded holes 104 mating with the screws or suchlike.

The attachment systems are able to keep the lid 102 in place in the event of an explosion.

The enclosure can also have, in correspondence with the abutment element 102a, a groove 106. The groove 106 can be positioned in the vicinity of the engagement element 12. For example, it can slide parallel to the engagement element 12.

The groove 106 can be able to house a seal, in order to limit the entry of gases and powders into the enclosure.

Some embodiments described here also concern a lamination joint 10 able to cooperate with an explosion-proof enclosure 100.

The joint 10 comprises an engagement element 12 and a seating 11. The engagement element 12 can have, in its section transverse to its longitudinal development, a trapezoidal shape.

The seating 11 can be able to house the engagement element 12 and can have a shape mating with the shape of the element 12 so as to define a clearance of the seating 11 with respect to the engagement element 12.

It is clear that modifications and/or additions of parts may be made to the explosion-proof enclosure 100 and to the lamination joint 10 as described heretofore, without departing from the field and scope of the present invention as defined by the claims.

In the following claims, the sole purpose of the references in brackets is to facilitate reading and they must not be considered as restrictive factors with regard to the field of protection claimed in the specific claims.

**Claims**

1. Explosion-proof enclosure (100) comprising a body (101) and a lid (102), **characterized in that** between said body (101) and said lid (102) there is a hinging element (103) which has as the only degree of freedom a rotation about an axis of rotation (O) and said enclosure (100) has a lamination joint (10) comprising a seating (11) able to house an engagement element (12) with a mating shape, wherein said seating (11) and said engagement element (12) are each made on one of either said body (101) or said lid (102), and both have a trapezoidal shape in the section transverse to their longitudinal development.

2. Enclosure (100) as in claim 1, **characterized in that** an interstice (13) is defined between said joint (10) and said engagement element (12) for gas to escape.

3. Enclosure (100) as in claim 1 or 2, **characterized in that** said engagement element (12) has a shape with a trapezoidal section tapered toward its free end and said seating (11) consequently has a shape tapered inward.

4. Enclosure (100) as in any claim hereinbefore, **characterized in that** said hinging element (103) is positioned with its axis of rotation (O) disposed substantially in correspondence with a lateral edge of said body (101) and lid (102).

5. Enclosure (100) as in any claim hereinbefore, **characterized in that** said lid (102) comprises an abutment element (102a) and said body (101) comprises an abutment element (101a), both mating in shape with each other.

6. Enclosure (100) as in claim 5, **characterized in that** the values of the size variables (a, b, c, d, $\alpha$) of said abutment elements (101a, 102a) are such that one edge (12a) of said engagement element (12), able to describe a trajectory (TA) corresponding to a circumference which has the axis of rotation (O) as its center and passing through the edge (12a), is not incident with the seating (11) in any point whatsoever of said trajectory (TA).

7. Enclosure (100) as in claim 6, **characterized in that** said size variables (a, b, c, d, $\alpha$) satisfy the geometric condition

$$\left(\left((a + b + 2*c)*cos\alpha.\right) - \sqrt{d^2 + \left(a + b + c - (d*sin\alpha.)\right)^2}\right) - t > 0$$

with respect to a defined tolerance value t.

8. Enclosure (100) as in claims from 5 to 7, **characterized in that** said abutment element (101a) has a width (LI) greater than the thickness of the container (101b) and that said abutment element (102a) has a width (L2) greater than the thickness of the cover element (102b).

9. Enclosure (100) as in any claim hereinbefore, **characterized in that** said hinging element (103) is a hinge (103) provided with two hinging arms (103a) attached to the respective lateral edges of said body (101) and said lid (102).

10. Enclosure (100) as in any claim hereinbefore, **characterized in that** it has attachment systems able, during use, to keep the lid (102) in position on the body (101) in the event of an explosion.

fig. 1

fig. 1a

fig. 2

fig. 3

fig. 4

fig. 4a

Europäisches
Patentamt

European
Patent Office

Office européen
des brevets

# EUROPEAN SEARCH REPORT

Application Number

EP 22 16 8035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 212 511 248 U (CHINA NAT PETROLEUM CORP ET AL.) 9 February 2021 (2021-02-09) * the whole document * | 1-10 | INV. H02B1/28 H02G3/08 |

TECHNICAL FIELDS SEARCHED (IPC)

H02B
H02G
H01H
H02K
H02H
H05K
B65D

The present search report has been drawn up for all claims

| Place of search | Date of completion of the search | Examiner |
|---|---|---|
| The Hague | 31 August 2022 | Galary, Grzegorz |

EPO FORM 1503 03.82 (P04C01)

## ANNEX TO THE EUROPEAN SEARCH REPORT
## ON EUROPEAN PATENT APPLICATION NO.

EP 22 16 8035

This annex lists the patent family members relating to the patent documents cited in  the above-mentioned European search report.
The members are as contained in the European Patent Office EDP file on
The European Patent Office is in no way liable for these particulars which are merely given for the purpose of information.

31-08-2022

| Patent document cited in search report | Publication date | Patent family member(s) | Publication date |
|---|---|---|---|
| CN 212511248 U | 09-02-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 212511248 U